# EUROPEAN PATENT SPECIFICATION

(11) **EP 2 961 885 B1**
(45) Date of publication and mention of the grant of the patent: **09.01.2019**
(21) Application number: 14756607.9
(22) Date of filing: 28.02.2014
(51) Int. Cl.: D21H 21/10, C01B 33/143, D21H 17/13, D21H 17/70, C02F 1/52, D21H 17/66, D21H 17/68, D21H 23/18

(54) **IN-LINE PRODUCTION OF SILICA FOR RETENTION PURPOSE**
INLINE-HERSTELLUNG VON SILICIUMDIOXID FÜR HALTEZWECKE
PRODUCTION DE SILICE EN LIGNE À DES FINS DE RÉTENTION

(30) Priority: 01.03.2013 SE 1300158
(43) Date of publication of application: 06.01.2016
(73) Proprietor: Stora Enso Oyj, 00101 Helsinki (FI)
(72) Inventor: HAKANSSON, Philip, 29437 Sölvesborg (SE)
(74) Representative: Steinrud, Henrik
(86) International application number: PCT/IB2014/000220
(87) International publication number: WO 2014/132119

(56) References cited:
- WO-A1-01/44108
- WO-A1-01/66600
- WO-A1-97/17289
- WO-A1-98/56716
- WO-A1-99/43887
- WO-A2-2006/008333
- US-A- 3 784 442
- US-A1- 2011 011 548
- US-B1- 6 183 650
- US-B1- 6 379 501
- CHAUHAN, V. S. ET AL.: 'Fiber loading of hardwood pulp by in- situ precipitation of aluminosilicate' BIORESOURCES vol. 2, no. 4, 2007, pages 560 - 571, XP055283707

## Description

### Technical field

The present document relates to a method for inline production method for a paper and paperboard making process, and for the simultaneous delivery of at least one additive into the stock suspension of a paper or paperboard making machine for the formation of a retention agent.

### Background

Silica is often used as a retention chemical or retention agent, either alone or together with another component, in order to retain fine material, mainly dissolved colloidal substances, chemicals, fines and filler particles, when producing paper or paper board. Silica can be produced in many ways such as dialysis, electroldialysis, neutralization, peptizing, whereas one common commercial way is by ion exchange of sodium metasilicate, with the common name sodium silicate (Na₂SiO₃), which is also known as water glass Other methods are also described in literature, e.g. treating water glass with acids whereafter the silica is formed in a tank or vessel.

However, these conventional technologies have some disadvantages. The solid contents of readymade colloidal silica products is for instance very low which results in expensive and environmentally unfriendly transportations of the product to the paper/board mills, and higher CO2 footprint. Another problem related to the manufacture of colloidal silica is that the process must be optimized in order to achieve a stable product that is not sedimented or flocculated, which may affect the performance of the colloidal silica. Also the on-site methods have some disadvantages.

US6379501B1 discloses a process for preparing cellulose product including substantially simultaneously or sequentially adding at least one aluminum compound and at least one silicate to a cellulose slurry.

WO9717289A1 discloses a method to improve the retention in the formation of paper, wherein a soluble metal salt and a silicate may be mixed before added to a papermaking slurry or added simultaneously or sequentially to the slurry.

There is a need for a new process for producing and adding a retention chemical to the paper or paper board making process.

### Summary

It is an object of the present disclosure, to provide an improved method for feeding retention chemical forming additives into the short circulation of a fibrous web forming machine.

The present invention discloses an in-line production method for providing a silica-based retention agent into a liquid flow of a stock suspension and into the short circulation of a paper making machine, wherein the method comprises the steps of:
(i) providing a liquid flow of a stock suspension; and
(ii) feeding a silicate and an acidic media into said liquid flow of the stock suspension, wherein said retention agent is formed directly in said stock suspension;
wherein said liquid flow constitutes a first portion of the total paper making stock suspension, which first portion comprises microfibrillated cellulose.

The silicate and the acidic media may be added to the stock suspension e.g. as a liquid flow.

The retention agent provided by the method of the invention may further improve the control of the dewatering rate and subsequently the strength properties of the paper.

By this method there is provided a way of forming a retention agent directly into the stock suspension. The need of transporting, e.g. a readymade solution of a retention agent is thereby abolished, and thus the retention aid may be formed in a very cost-efficient way. Further as the retention agent is formed directly into the stock suspension it may very quickly and efficiently adhere to the fine particles, or the filler in the stock suspension and thus a more efficient effect may be achieved.

The method of the invention further enables the manufacturing of a retention system that is impossible or difficult to provide with existing methods, since the requirement on the colloidal stability of the system is not as high as compared with existing methods. In the method of the invention, colloidal instability may even be of an advantage and improve the retention properties.

Two or more additives may be fed to the stock suspension and allowed to react with one another to form the retention agent or to initiate or promote the formation of the retention agent.

The retention agent is a silica-based retention agent. The silica-based retention agent may e.g. be silica or a hybrid thereof. The silica-based retention agent is preferably in a colloidal form, most preferably in the form of nanoparticles.

In contrast to a readymade colloidal solution that must be stable over weeks and months, the present invention enables the use of a rapid flocculated silica particle which further improves the retention of fines and colloidal substances.

The method may comprise adding silicic acid to the stock suspension, which silicic acid is further polymerized to colloidal silica in the suspension stock.

The method comprises adding a first and a second additive into a stock suspension, whereby the silica-based retention agent is formed directly in said stock suspension, and wherein said first additive is a silicate and said second additives is an acidic media.

The silicate may e.g. be a water soluble silicate, such as sodium silicate, calcium silicate, potassium silicate or magnesium silicate.

The acidic media may, e.g., comprise any one of mineral acids, such as sulphuric acids, phosphoric acids, hydrochloric acids; acidic metal salts and/or carbon dioxide.

Alternatively, or additionally, the acidic media may comprise a metal salt or a polyvalent metal ion; an acidic salt, such as ammonium sulfate, aluminum sulfate, polyaluminum nitrate and/or polyaluminium chloride. When treating sodium silicate with an acidic media comprising polyaluminium chloride, polyaluminosilicate is formed. The thereby formed polyaluminosilicate is highly charged, which improves the retention characteristics of the retention agent.

The acidic media may be fed into the stock in one or several (e.g. in two) steps.

The initial acidification of the silicate yields silicic acid (Si(OH)4). Thereafter, said silicic acid is polymerized, it increases in molecular size and form micelles of polymerized silicic acid with a strong negative charge. Said polymerization can be controlled by controlling the pH or by controlling the concentration of salts present during polymerization. At a pH below 7, silica gels are formed. At neutral pH or at pH above 7, silica sols are formed. In accordance with the present invention, it is preferred that silica sols are formed and consequently a polymerization pH slightly above 7, e.g. above 7.5 is preferred.

In one embodiment, said first and second additive are fed simultaneously into the stock suspension. This means that e.g. the sodium silicate and the acidic media are fed at the same time, e.g. by one dosing equipment or nozzle, to the stock suspension where the silica is formed in the stock suspension. In accordance with this embodiment, silicic acid may be formed already in the dosing equipment but the final polymerization to colloidal silica may take place in the stock suspension. This way, the risk for undesired reactions of the first or second additive with other components or agents in the stock may be reduced. Moreover, discoloration/yellowing of the fibers may be avoided. In another embodiment, said first additive may be fed into the stock firstly and said second additive may fed into the stock substantially immediately after said first additive. This way, the risk for undesired reactions of the acidic media with other agents,e.g. with fillers such as calcium carbonate, may be reduced. The second additive (e.g. the acid) may be fed into the stock in one or several steps immediately after the addition of said first additive.

In yet another embodiment, said second additive is fed into the stock firstly, in one or several steps, and said first additive is fed into the stock substantially immediately after the addition of said second additive. This way, discoloration or yellowing of the fibers may be avoided.

The feeding of the additive or additives into the liquid flow of the stock suspension and into the short circulation may be performed by injection. In one embodiment, the additives may be fed simultaneously by injection. In another embodiment, the additives may be fed separately by injection.

The injection of the additive or additives into the liquid flow of the stock suspension may be performed from one or several nozzles in a direction substantially transverse to the direction of the liquid flow, and at a flow rate that is higher than that of the liquid flow of the stock suspension. The injection may thus be performed by apparatuses such as those disclosed in WO2011/110744.

The liquid flow stock suspension may comprise at least one of the following components: virgin pulp suspension (long-fiber pulp, short-fiber pulp, mechanical pulp, chemo mechanical pulp, chemical pulp, microfiber pulp, nanofiber pulp), recycled pulp suspension (recycled pulp, reject, fiber fraction from the fiber recovery filter), additive suspension and solids-containing filtrate.

Both the first and second additive may be fed into said stock suspension as liquid flows. The second additive, i.e. the neutralization chemical, may also be injected in the form of a gas. The liquid flow comprising said first additive may comprise further additives that optimize the charge and/or particle size of the formed retention aid. Such further additives may be, e.g., surfactants, alcohols, non-ionic, nucleation agents, amphoteric and/or cationic compounds.

The retention agent is formed in the stock suspension in the presence of microfibrillated cellulose (MFC). When the polymerization to colloidal silica is taking place in the presence of MFC, the formed silica-based retention aid may form complexes with the MFC having improved retention and dewatering properties. The MFC may e.g. be fed (e.g. by injection) to the stock suspension separately, but in close proximity, to the feeding of the waterglass and the acidic media. Alternatively, the MFC may be fed (e.g. by injection) to the stock suspension together with the feeding of the waterglass. In this embodiment, the MFC may be mixed with the waterglass prior to the injection into the liquid flow of a paper making stock. According to yet another embodiment, the MFC may be provided in the liquid flow of a paper making stock and the waterglass and the acidic media may be fed separately or simultaneously by injection.

The term "microfibrillated cellulose" (MFC) is also known as nanocellulose. It is a material typically made from wood cellulose fibers, both from hardwood or softwood fibers. It can also be made from microbial sources, agricultural fibers such as wheat straw pulp, bamboo or other non-wood fiber sources. In microfibrillated cellulose the individual microfibrils have been partly or totally detached from each other. A microfibrillated cellulose fibril is normally very thin (∼20 nm) and the length is often between 100 nm to 10 µm. However, the microfibrils may also be longer, for example between 10-200 µm, but lengths even 2000 µm can be found due to wide length distribution. Fibers that has been fibrillated and which have microfibrils on the surface and microfibrils that are separated and located in a water phase of a slurry are included in the definition MFC.

Furthermore, cellulose whiskers, microcrystalline cellulose (MCC), nanocrystalline cellulose (NCC) or regenerated cellulose fibers and particles are also included in the definition MFC.

The fibrils may also be polymer coated fibrils, i.e. a modified fibril either chemically or physically.

In one embodiment of the invention, a cationic compound, such as a cationic polymer, e.g. cationic starch, may be fed into the stock suspension after said first and second additive are fed into the stock suspension. The addition of a cationic compound improves the admixture of the formed retention aid in the stock suspension. The cationic compound may be fed into the liquid flow of the stock suspension by injection in the same manner as the first and second additive may be injected into the stock suspension.

The liquid flow of a stock suspension treated in accordance with the invention is only a portion of the total paper making stock. Said first portion may e.g. constitute 0.1 - 10%, or 0.1 - 1 % or 1 - 5 % by weight of the total paper making stock. The first and second additive are added to a first stock suspension, which first stock suspension may be blended with a second stock suspension before carried to the paper making machine. Said first portion comprises MFC, while said second portion may comprise the longest fibers present in the stock. In one mode, said first stock suspension comprises MFC to an amount of 70 - 100 %, preferably 80 - 100% most preferably to 100 % by weight of said first stock suspension. The treatment of a portion of the stock enables better control of the reactions; undesired side-reactions between e.g. the added acid and certain chemicals/substances (e.g. calcium carbonate) in the stock may be avoided. Moreover, it enables better control of the charge of the system. In one preferred mode, the first stock suspension comprises or consists of MFC and an Optical Brightening agent (OBA), such as Triazine-stilbenes (di-, tetra- or hexa-sulfonated). OBA enhances the dispersion of MFC, which promotes the precipitation of the silica on the fibers. Said first stock suspension may e.g. comprise 10 - 50% OBA. The first stock suspension may e.g. comprise 50 - 90 % MFC, the reminder consisting of OBA.

### Brief description of the drawings

Embodiments of the present solution will now be described, by way of example, with reference to the accompanying schematic drawings.
Fig. 1 shows schematically a short circulation arrangement according to one embodiment of the invention.
Figs 2a-b shows schematically a short circulation arrangement according to one alternative embodiment of the invention.

### Detailed description of Embodiments

By "in-line production" is meant that the retention agent is at least partly formed directly in the flow of the paper making stock, instead of being produced separately from the paper making process.

Different types of dosage systems that may be used in connection with the invention are disclosed in e.g. WO20111/110744, US2007258316, WO0225012, US2007258315, and US20080011788.

According to the invention there is provided an inline production method where additives, such as sodium silicate and an acidic media, are fed into the short circulation of the paper making machine, i.e. into the fibrous web or paper making stock. When a silica-based retention agent is formed in accordance with the invention, the reaction between the acid and the silicate to form silicic acid as well as the further polymerization to colloidal silica may occur in the stock suspension. Alternatively, but also within the scope of the invention, silicic acid may be formed already in the dosing equipment, but the polymerization may be finalized in the stock suspension.

The additives may be fed separately or substantially simultaneously into the liquid flow of the paper making stock.

What is meant by "substantially simultaneously" may vary as described below, however in this context it is to be understood that the additives are fed into the liquid flow of the stock suspension such that e.g. silica may be formed, directly into the stock suspension.

Where two or more additives are fed into the short circulation these are preferably allowed to react with one another, or one of the additives is allowed to initiate or promote the polymerization of the other, which means that they are fed into the short circulation in a manner which allows for the additives to react.

This provides for a completely new way of providing the retention agent such as silica, or a hybrid thereof, to for instance a fibrous web in a paper making process.

In one embodiment of the present invention, as shown in Fig. 1 two additives, a first A1 and second A2, are injected simultaneously into the short circulation and stock suspension of the paper making machine, i.e. the same dosing equipment is used for both additives A1, A2. In this embodiment the retention agent, such as silica, is formed in the stock suspension S. In an alternative, preferred embodiment (not shown), the two additives are injected to a first suspension comprising MFC, which first suspension is thereafter added to the stock suspension S. In the figures the white water F is carried to e.g. a mixing tank or filtrate tank 1, to which various fibrous components are introduced for the paper making stock, S, preparation. From fittings at least one of virgin pulp suspension (long-fiber pulp, short-fiber pulp, mechanical pulp, chemomechanical pulp, chemical pulp, microfiber pulp, nanofiber pulp), recycled pulp suspension (recycled pulp, reject, fiber fraction from the fiber recovery filter), regenerated cellulose, dissolving pulp, additive suspension and solids-containing filtrate is carried to the mixing tank 1 and from there on into the short circulation of the paper making machine.

The suspension may be conveyed from the mixing tank by a mixing pump to a vortex cleaner, where heavier particles are separated. The accept of the vortex cleaning continues to a gas separation tank, where air and/or other gases are removed from the paper making stock. The paper making stock is then transported to a feed pump of the headbox, which pumps the paper making stock to a so-called headbox screen, where large sized particles are separated from the paper making stock. The accept faction is carried to the paper making machine through its headbox. The short circulation of fiber web machines producing less demanding end products may, however, not have a vortex cleaner, gas separation plant and/or headbox.

In an alternative embodiment, as shown in Figs 2a and 2b the first A1 and second A2 additives are fed or injected separately, i.e. two dosing units may be used. Fig. 2a shows the situation where the first additive A1, which may be is sodium silicate, is added prior to the second additive A2, which may be the acidic media. Fig. 2b shows the opposite situation where the second additive A2, which may be the acidic media is fed to the stock suspension prior to the feeding or injection of the first additive A1, which may be sodium silicate. In these embodiments, the silica is formed substantially directly at the point of injection or feeding of the last of the two additives and in the stock suspension. The point of injection or feeding of the additive or additives may be any point in the short circulation, but in some cases the injection point may be before the vortex cleaning plant (not shown). The first additive may be injected on the pressure side of the vortex cleaner and second additive may be injected a few meters after the carbon dioxide has dissolved in the same pipe. It is however conceivable that the formation of the retention agent could take place closer to the headbox, or that the distance between the injectors is very small, virtually injecting the additives at the same location in the short circulation. This depends on the requirements of the end product and the design of the paper making machine.

According to the invention there is provided an inline production method where additives, such as water glass and the acidic media etc., are fed into the short circulation of the paper making machine, i.e. into the fibrous web or paper making stock. The point or point where the injection takes place thus forms a "retention agent reaction zone".

In EP1219344 B1, a method and apparatus which are particularly well applicable to homogeneous adding of a liquid chemical or additive into a liquid flow are disclosed. In this method a mixer nozzle is utilized, and the liquid chemical is fed into the mixer nozzle and a second liquid is introduced into the same mixer nozzle, such that the additive and second liquid are brought into communication with each other substantially at the same time as the chemical is discharged together with the second liquid or additive from the mixer nozzle at high speed into the process liquid, and transverse to the process liquid flow in the flow channel. The chemical and second liquid may be discharged directly into the fiber suspension flowing towards the headbox of the paper machine. The second liquid may be a circulation liquid from the paper process, such as white water, or may be fresh water depending on the requirements of the liquid chemical to be added to the fiber flow. The flow speed from the mixer nozzle may be around five times the flow speed of the fiber suspension into which the chemical and second liquid is discharged. By using this type of fast addition of the additives forming the retention agent, there is provided a cost-efficient manner for adding the retention agent.

The retention agent formed by the method of the invention is a silica-based retention agent. Said silica-based retention agent is formed by the reaction between a silicate, e.g. sodium silicate, and an acid, whereby silicic acid is initially formed. Said silicic acid is polymerized to a colloidal silica, whose properties depend on the reaction media provided. If the pH is below 7 or if salts are present in the stock suspension, silica gels are formed. However, if the pH is neutral or above 7, and no salts are present, silica sols are formed. Thus, the form of the colloidal silica may be controlled by the pH and/or the addition or removal of salts. In one embodiment of the present invention, the silicate is a salt-less silicate, i.e. no salts are added together with the silicate. In this way, the reaction and polymerization of silica is performed in a salt less media whereby silica sols may be formed.

If said polymerization occurs in the presence of polymers, fibers, minerals or other ions a hybrid material comprising silica may be formed.

In one preferred mode of the invention, the silicate is a sodium silicate. The sodium silicate and the acid media may be added simultaneously to the stock suspension. Alternatively, either of the water glass or acidic media is firstly added into the stock suspension and upon addition of the other additive, i.e. acidic media or water glass, respectively, the silica-based retention agent may be formed directly in the stock suspension.

The acidic media may be a mineral acid, an acidic metal salt or carbon dioxide.

The acidic media used in the present invention may be any one of mineral acids, such as sulphuric acid, acidic metal salts and carbon dioxide, but may also be any other acidic media suitable for forming the retention agent.

The acidic media may further be an acidic salt, such as e.g. ammonium sulfate, aluminum sulfate, polyaluminum nitrate or polyaluminium chloride.

Depending on the acidic media used, different types of silica-based retention agents are formed. If for example polyaluminium chloride is used, an aluminum silicate is produced, which is highly charged, and thus, improves the retention characteristics of the agent.

In another embodiment of the invention, the silica-based retention agent may be formed in the stock suspension by hydrolysis of orthosilicate (TEOS) in the presence of ethanol and ammonia (e.g. ammonium hydroxide). In accordance with this embodiment, TEOS, ethanol and ammonia are added separatenly or simultaneously to the stock suspension. This gives rise to spherical, mono dispersed, silica particles.

When a silica-based retention agent is to be formed, the acidic media and the water soluble silicate (e.g. sodium silicate) are preferably added at such concentrations so that the main fraction of the sodium silicate is neutralized and turned into colloidal particles. After the silica-based retention agent is formed, the agent will have approximately the same pH as the stock suspension, normally around 7.5 - 10. The acidic media and the water soluble silicate are preferably added as diluted aqueous solutions, preferably as 1:50 dilutions, in order to avoid gelation.

The silica-based retention agent formed by the method of the invention may comprise colloidal particles with spherical diameters of between 2 - 100 nm. However, in some embodiments, the particles may be larger than 100 nm, even up to 0.1 or even 10 µm.

## Claims

1. An in-line production method for providing a silica-based retention agent into a liquid flow of a stock suspension and into the short circulation of a paper or paperboard making machine, wherein the method comprises the steps of:
(i) providing a liquid flow of a stock suspension; and
(ii) feeding a silicate and an acidic media into said liquid flow of the stock suspension, wherein said retention agent is formed directly in said stock suspension;wherein said liquid flow constitutes a first portion of the total paper making stock suspension, which first portion comprises microfibrillated cellulose.

2. The method as claimed in claim 1, wherein the acidic media comprises any one of mineral acids, acidic metal salts and carbon dioxide.

3. The method as claimed in claim 1, wherein the acidic media comprises an acidic salt, such as ammonium sulfate, aluminum sulfate, polyaluminum nitrate or polyaluminium chloride.

4. The method as claimed in any one of claims 1 - 3, wherein said silicate and acid media acid media are fed simultaneously into the stock suspension.

5. The method as claimed in claim 1 - 4, wherein said silicate is fed into the stock firstly and said acid media is fed into the stock substantially immediately after said silicate.

6. The method as claimed in claim 1 - 4, wherein said acid media is fed into the stock firstly and said silicate is fed into the stock substantially immediately after said acid media.

7. The method as claimed in any one the preceding claims, wherein the feeding into the liquid flow of the stock suspension and into the short circulation is performed by injecting the at least one additive into the liquid flow.

8. The method as claimed in any one of claims 1 - 7, wherein the silicate and acidic media are fed simultaneously by injection.

9. The method as claimed in any one of claims 1-7, wherein the silicate and acidic media are fed separately by injection.

10. The method as claimed in any one of the claims 7 - 9, wherein the injection into the liquid flow of the stock suspension is performed from one or several nozzles in a direction substantially transverse to the direction of the liquid flow, and at a flow rate that is higher than that of the liquid flow of the stock suspension.

11. The method as claimed in any one of the preceding claims, wherein the liquid flow stock suspension comprises at least one of the following components: virgin pulp suspension (long-fiber pulp, short-fiber pulp, mechanical pulp, chemo mechanical pulp, chemical pulp, microfiber pulp, nanofiber pulp), recycled pulp suspension (recycled pulp, reject, fiber fraction from the fiber recovery filter), additive suspension and solids-containing filtrate.

12. The method according to anyone of claims 1-11, wherein the silicate is fed into said stock suspension as a liquid flow.

13. The method as claimed in claim 12, wherein said liquid flow comprises, in addition to said silicate, further additives, that optimize the charge and/or the particle size of the formed silica.

14. The method according to any one of claims 1 - 13, wherein the method further comprises feeding a cationic compound into the stock suspension after said silicate and said acid media is fed into the stock suspension.

## Patentansprüche

1. Inline-Produktionsverfahren zum Bereitstellen eines silicatischen Retentionsmittels in einer Flüssigkeitsströmung einer Stoffsuspension und in dem kurzen Siebkreislauf einer Papier- oder Kartonherstellungsmaschine, worin das Verfahren die folgenden Schritte umfasst:
(i) Bereitstellen einer Flüssigkeitsströmung einer Stoffsuspension; und
(ii) Zuführen eines silicatischen und eines säurehaltigen Mediums in diese Flüssigkeitsströmung der Stoffsuspension, worin das Retentionsmittel direkt in dieser Stoffsuspension gebildet wird; worin diese Flüssigkeitsströmung einen ersten Teil der gesamten Papierherstellungs-Stoffsuspension bildet, deren erster Teil microfibrillierte Cellulose umfasst.

2. Verfahren nach Anspruch 1, worin das säurehaltige Medium entweder Mineralsäuren, säurehaltige Metallsalze oder Kohlendioxid umfasst.

3. Verfahren nach Anspruch 1, worin das säurehaltige Medium ein säurehaltiges Salz, wie beispielsweise Ammoniumsulfat, Aluminiumsulfat, Polyaluminiumnitrat oder Polyaluminiumchlorid, umfasst.

4. Verfahren nach einem der Ansprüche 1 - 3, worin dieses silicatische und dieses säurehaltige Medium gleichzeitig der Stoffsuspension zugeführt werden.

5. Verfahren nach den Ansprüchen 1 - 4, worin dieses Silicat dem Stoff zuerst zugeführt wird und dieses säurehaltige Medium dem Stoff im Wesentlichen unmittelbar nach diesem Silicat zugeführt wird.

6. Verfahren nach den Ansprüchen 1 - 4, worin dieses säurehaltige Medium dem Stoff zuerst zugeführt wird und dieses Silicat dem Stoff im Wesentlichen unmittelbar nach diesem säurehaltigen Medium zugeführt wird.

7. Verfahren nach einem der vorhergehenden Ansprüche, worin das Zuführen in die Flüssigkeitsströmung der Stoffsuspension und in den kurzen Siebkreislauf durch Injizieren des mindestens einen Zusatzstoffs in die Flüssigkeitsströmung ausgeführt wird.

8. Verfahren nach einem der Ansprüche 1 - 7, worin das silicatische und das säurehaltige Medium gleichzeitig per Injektion zugeführt werden.

9. Verfahren nach einem der Ansprüche 1 - 7, worin das silicatische und das säurehaltige Medium getrennt per Injektion zugeführt werden.

10. Verfahren nach einem der Ansprüche 7 - 9, worin die Injektion in die Flüssigkeitsströmung der Stoffsuspension über eine oder mehrere Düsen in einer im Wesentlichen transversalen Richtung in die Richtung der Flüssigkeitsströmung und mit einer Durchflussrate ausgeführt wird, die höher ist als die der Flüssigkeitsströmung der Stoffsuspension.

11. Verfahren nach einem der vorhergehenden Ansprüche, worin die Stoffsuspension der Flüssigkeitsströmung mindestens eine der folgenden Komponenten umfasst: Frischzellstoffsuspension (Langfaserzellstoff, Kurzfaserzellstoff, mechanischer Holzstoff, chemomechanischer Holzstoff, Zellstoff, Mikrofaser-Zellstoff, Nanofaser-Zellstoff), recycelte Zellstoffsuspension (recycelter Zellstoff, Ausschuss, Faserfraktion aus dem Faserrückgewinnungsfilter), Zusatzstoffsuspension und feststoffenthaltendes Filtrat.

12. Verfahren nach einem der Ansprüche 1 - 11, worin das Silicat der Stoffsuspension als Flüssigkeitsströmung zugeführt wird.

13. Verfahren nach Anspruch 12, worin die Flüssigkeitsströmung zusätzlich zu diesem Silicat weitere Zusatzstoffe umfasst, die die Ladung und/oder Teilchengröße des gebildeten Silicas optimieren.

14. Verfahren nach einem der Ansprüche 1 - 13, worin das Verfahren ferner das Zuführen einer kationischen Verbindung in die Stoffsuspension umfasst, sobald dieses Silicat und dieses säurehaltige Medium der Stoffsuspension zugeführt sind.

## Revendications

1. Procédé de production en ligne pour l'introduction d'un agent de rétention à base de silice dans un écoulement liquide d'une suspension de bouillie et dans le circuit court d'une machine de fabrication de papier ou de carton, le procédé comprenant les étapes :
(i) de mise en place d'un écoulement liquide d'une suspension de bouillie ; et
(ii) d'introduction d'un silicate et d'un milieu acide dans ledit écoulement liquide de la suspension de bouillie, où ledit agent de rétention est formé directement dans ladite suspension de bouillie ; où ledit écoulement liquide constitue une première partie de la suspension de bouillie totale de fabrication de papier, dont la première partie comprend de la cellulose microfibrillée.

2. Procédé selon la revendication 1, dans lequel le milieu acide comprend l'un quelconque parmi les acides minéraux, les sels métalliques d'acides et le dioxyde de carbone.

3. Procédé selon la revendication 1, dans lequel le milieu acide comprend un sel d'acide, tel que du sulfate d'ammonium, du sulfate d'aluminium, du nitrate de polyaluminium ou du chlorure de polyaluminium.

4. Procédé selon l'une quelconque des revendications 1 à 3, dans lequel lesdits milieux silicatés et acides sont introduits simultanément dans la suspension de bouillie.

5. Procédé selon les revendications 1 à 4, dans lequel ledit silicate est d'abord introduit dans la bouillie et ledit milieu acide est introduit dans la bouillie presque immédiatement après ledit silicate.

6. Procédé selon les revendications 1 à 4, dans lequel ledit milieu acide est d'abord introduit dans la bouillie et ledit silicate est introduit dans la bouillie presque immédiatement après ledit milieu acide.

7. Procédé selon l'une quelconque des revendications précédentes, dans lequel l'introduction dans l'écoulement liquide de la suspension de bouillie et dans le circuit court est effectuée en injectant l'au moins un additif dans l'écoulement liquide.

8. Procédé selon l'une quelconque des revendications 1 à 7, dans lequel les milieux silicatés et acides sont introduits simultanément par injection.

9. Procédé selon l'une quelconque des revendications 1 à 7, dans lequel les milieux silicatés et acides sont introduits séparément par injection.

10. Procédé selon l'une quelconque des revendications 7 à 9, dans lequel l'injection dans l'écoulement liquide de la suspension de bouillie est effectuée à partir d'une ou plusieurs buses dans une direction sensiblement transversale à la direction de l'écoulement de liquide et à un débit qui est plus élevé que celui de l'écoulement liquide de la suspension de bouillie.

11. Procédé selon l'une quelconque des revendications précédentes, dans lequel la suspension de bouillie d'écoulement liquide comprend au moins l'un des composants suivants : une suspension de pâte vierge (pâte à fibres longues, pâte à fibres courtes, pâte mécanique, pâte chimico-mécanique, pâte chimique, pâte de microfibres, pâte de nanofibres), une suspension de pâte recyclée (pâte recyclée, rejet, fraction de fibres provenant du filtre de récupération de fibres), une suspension d'additifs et un filtrat contenant des solides.

12. Procédé selon l'une quelconque des revendications 1 à 11, dans lequel le silicate est introduit dans ladite suspension de bouillie sous la forme d'un écoulement liquide.

13. Procédé selon la revendication 12, dans lequel ledit écoulement liquide comprend, en plus dudit silicate, d'autres additifs, qui optimisent la charge et/ou la taille de particule de la silice formée.

14. Procédé selon l'une quelconque des revendications 1 à 13, dans lequel le procédé comprend en outre l'introduction d'un composé cationique dans la suspension de bouillie après que ledit silicate et ledit milieu acide aient été introduits dans la suspension de bouillie.
